# EUROPEAN PATENT APPLICATION

(11) **EP 4 760 643 A1**
(43) Date of publication of application: **17.06.2026**
(21) Application number: 25223315.0
(22) Date of filing: 15.12.2025
(51) Int. Cl.: G06T 15/50

(54) **LIGHTING CUSTOMIZATION OF TEXT-TO-IMAGE DIFFUSION MODELS**

(30) Priority: 16.12.2024 IN 202411099433
(71) Applicant: Dolby Laboratories Licensing Corporation, San Francisco, CA 94103 (US)
(72) Inventor: CAI, Haoming, c/o Dolby Laboratories Licensing Corporation, 94103 (US); Huang, Tsung-Wei, c/o Dolby Laboratories Licensing Corporation, 94103 (US); GEHLOT, Shiv, c/o Dolby Laboratories Licensing Corporation, 94103 (US); SU, Guan-Ming, c/o Dolby Laboratories Licensing Corporation, 94103 (US)
(74) Representative: Dolby International AB Patent Group Europe

(57) **Abstract**

A user prompt for a diffusion model to generate an image is received. Noisy latent features generated by denoising layers of the diffusion model are collected based on the user prompt and are to generate a pre-customized version of the image. Pre-customized lighting properties of the pre-customized version of the image are predicted based on the noisy latent features. Light source properties of a light source to be logically applied to generate a customized version of the image are determined. The light source properties of the light source are applied to the pre-customized lighting properties of the pre-customized version of the image to generate customized lighting properties of the customized version of the image. A loss computed from the customized lighting properties and the pre-customized lighting properties is used to guide the diffusion model to generate the customized version of the image.

## Description

### CROSS-REFERENCE TO RELATED APPLICATIONS

This patent application claims the benefit of priority from Indian Provisional Patent Application Ser. No. 202411099433, filed on 16 Dec. 2024, and incorporated by reference in its entirety.

### TECHNOLOGY

The present disclosure relates generally to visual computing and more particularly to lighting customization of text-to-image diffusion models.

### BACKGROUND

While two-dimensional (2D) portrait images may be generated using existing diffusion models, these models may not support continuous adjustment of lighting positions and intensities. Applying existing relighting methods such as one-light-at-a-time (OLAT) trained relighting methods as post-processing to generated images from the diffusion models still fails to produce relatively realistic high quality portrait images due to a significant domain gap between knowledge learned by the diffusion model and knowledge learned by the OLAT -trained relighting methods.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section. Similarly, issues identified with respect to one or more approaches should not assume to have been recognized in any prior art on the basis of this section, unless otherwise indicated.

### BRIEF DESCRIPTION OF DRAWINGS

The present disclosure is illustrated by way of example, and not by way of limitation, in the figures of the accompanying drawings and in which like reference numerals refer to similar elements and in which:
FIG. 1A illustrates an example computer-implemented illumination director; FIG. 1B through FIG. 1D illustrate example operations performed by an illumination director; FIG. 1E illustrates example light customization operations;
FIG. 2A illustrates example reference, pre-customized and lighting customized images; FIG. 2B illustrates example ground truth relating to lighting properties of training images and predicted lighting properties from the training images;
FIG. 3A illustrates example lighting customized images; FIG. 3B illustrates example shadow contrast controlled images;
FIG. 4 illustrates an example process flow; and
FIG. 5 illustrates an example hardware platform on which a computer or a computing device as described herein may be implemented.

### DESCRIPTION OF EXAMPLE EMBODIMENTS

Example embodiments, which relate to lighting customization of text-to-image diffusion models, are described herein. In the following description, for the purposes of explanation, numerous specific details are set forth in order to provide a thorough understanding of the present disclosure. It will be apparent, however, that the present disclosure may be practiced without these specific details. In other instances, well-known structures and devices are not described in exhaustive detail, in order to avoid unnecessarily occluding, obscuring, or obfuscating the present disclosure.

Example embodiments are described herein according to the following outline:
1. GENERAL OVERVIEW
2. ILLUMINATION DIRECTOR
3. TRAINING AND GUIDANCE PHASES
4. LIGHTING CUSTOMIZATION
5. ILLUMINATION ESTIMATOR
6. TRAINING OPERATIONS
7. GUIDANCE OPERATIONS
8. LIGHTING CUSTOMIZATION
9. RELIGHTING
10. SHADOW CONTRAST CONTROL
11. LIGHTING TRANSFER
12. EXAMPLE PROCESS FLOWS
13. IMPLEMENTATION MECHANISMS - HARDWARE OVERVIEW
14. EQUIVALENTS, EXTENSIONS, ALTERNATIVES AND MISCELLANEOUS

### 1. GENERAL OVERVIEW

This overview presents a basic description of some aspects of an example embodiment of the present invention. It should be noted that this overview is not an extensive or exhaustive summary of aspects of the example embodiment. Moreover, it should be noted that this overview is not intended to be understood as identifying any particularly significant aspects or elements of the example embodiment, nor as delineating any scope of the example embodiment in particular, nor the disclosure in general. This overview merely presents some concepts that relate to the example embodiment in a condensed and simplified format, and should be understood as merely a conceptual prelude to a more detailed description of example embodiments that follows below.

Techniques described herein robustly address the challenge of generating 2D portrait images using diffusion models under user-defined lighting conditions. The user-defined lighting conditions can be extracted from a reference image or specified at least in part with user input from a user describing corresponding lighting or light source properties.

As previously noted, existing diffusion models lack an integrated solution for continuous adjustment of lighting positions and intensities. While relighting methods such as OLAT-trained relighting methods may be applied as post-processing to text-to-image (T2I) diffusion models, the diffusion models still lack capability to understand lighting properties during image generation. These models sample or acquire knowledge from the training dataset throughout the denoising process, making them totally or largely ignore underlying physical principles for lighting properties associated with images. Hence, it remains challenging to adapt a physical, relatively realistic rendering process into these diffusion models. Due to a significant domain gap between knowledge learned by the diffusion model and knowledge learned by the OLAT-trained relighting methods, such diffusion methods and/or post-processing relighting methods fail to generate relatively high quality relighted- or lighting-transferred images. Example diffusion models are described in Rombach, Robin et al. "High-resolution image synthesis with latent diffusion models," Proceedings of the IEEE/CVF conference on computer vision and pattern recognition, pp. 10684-10695 (2022), the contents of which are incorporated herein by reference in entirety.

In contrast, techniques described herein can be used or implemented to support relighting and lighting transfer with relatively high flexibility in customizing portrait lighting of generated images from diffusion models. To address the issues and shortcomings in the existing models and/or post processing methods, an image generation pipeline implemented under techniques described herein can integrate user-defined lighting customization directly into the diffusion process including but not limited to denoising processing in the diffusion models, thereby enabling relatively precise control over three-dimensional (3D) lighting or light source position, light intensity, and so on, for artificial intelligence (AI) or machine learning (ML) portrait image generation. Lighting properties involved in automatic or AI/ML image generation can be learned in a training phase by the diffusion models and/or models/modules as described herein operating in conjunction with the diffusion models. In a guidance or model application phase, some or all of the lighting properties or (types) can be individually modulated or controlled when these models are used to generate portrait images.

Image generation techniques as described herein may be used or implemented in a manner grounded in knowledge of a physical rendering process of relighting and the intrinsic lighting or lighting related properties, which knowledge is encoded within or learned by the diffusion models. Under these techniques, a basis for editing portrait lighting or performing lighting customization in AI/ML image generation lies in estimating lighting (intrinsic or related) properties like shading, shadows, lighting position, surface normal, etc. The diffusion models as described herein can be trained to optimize prediction and estimation of lighting properties with relatively small training data sets and relatively modest computing resources. Yet these models can generate output images with relatively high efficiency and quality. Such output images as generated by the models can also be readily explainable, visualized and (e.g., visually, perceptually, etc.) compared with reference images under target or customized lighting properties.

A wide variety of users including artists can be enabled to generate and customize images from these diffusion models and/or other models/modules operating with the diffusion models. A user is enabled to easily input or specify desired or reference lighting conditions by way of an (input) reference image or explicit user input specifying the reference lighting conditions such as light source location (position/direction) or intensity. A diffusion model as described herein can then adapt and improve a readout guidance model with physics-based or optics-based design/model. Examples of readout guidance are described in Luo, Grace et al. "Readout guidance: Learning control from diffusion features," Proceedings of the IEEE/CVF Conference on Computer Vision and Pattern Recognition, pp. 8217-8227 (2024), the contents of which are incorporated herein by reference in entirety.

The reference lighting conditions extracted from the reference image or explicitly specified in the user input may be used to adapt and improve an image for lighting customization such as relighting or lighting transfer. More specifically, controlling lighting properties to be exhibited by the generated image from the diffusion model may be determined or effectuated by applying the reference lighting conditions to pre-customized lighting properties of a pre-customized image relating to the generated image.

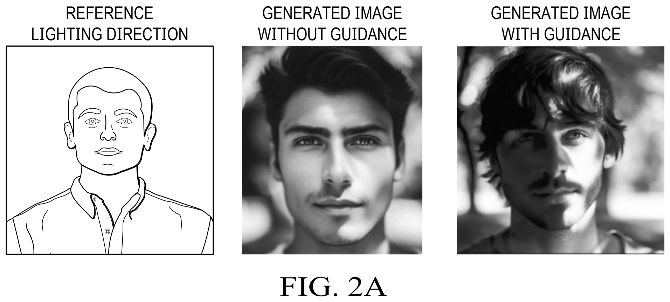

The diffusion model may be guided to generate the controlling lighting properties in accordance with the reference lighting conditions. For example, in FIG. 2A, the reference lighting properties corresponding to a dramatic shadow on the left side of a face as indicated in the reference image may be captured or represented in the controlling lighting properties used to generate the lighting customized image. Instead of generating the pre-customized image that may contain a plain portrait, the diffusion model under the guidance of the controlling lighting properties generated from the reference lighting conditions such as light-source-specific location and intensity, (e.g., dramatic, specific, light-source specific, etc.) transfers lighting effects or conditions from the reference image into the generated image.

In summary, an image generation pipeline as described herein implements relatively advanced neural rendering techniques that are integrated with physics-based models. The image generation pipeline can be trained and applied to support relatively high quality identity preservation and depth map accuracy. Realistic and controllable lighting effects can be relatively precisely achieved in generated images from the image generation pipeline. The generated images can demonstrate natural appearances of the subject illuminated under various lighting conditions. Example applications of techniques as described herein may include, but are not necessarily limited to only, photography, virtual reality, and digital art.

Example embodiments described herein relate to generating lighting customized images with diffusion models. A user prompt for a diffusion model to generate an image is received. Noisy latent features generated by one or more denoising layers of the diffusion model are collected. The noisy latent features are to generate a pre-customized version of the image based on the user prompt (e.g., "A portrait photo of a young man"). One or more pre-customized lighting properties of the pre-customized version of the image are predicted based at least in part on the noisy latent features. One or more light source properties of a light source to be logically applied to generate a customized version of the image are determined. The one or more light source properties of the light source are applied to the one or more pre-customized lighting properties of the pre-customized version of the image to generate one or more customized lighting properties of the customized version of the image. A loss computed from the one or more customized lighting properties and the one or more pre-customized lighting properties is used to guide the diffusion model to generate the customized version of the image.

In some example embodiments, mechanisms as described herein form a part of a media processing system, including but not limited to any of: an image processing system, a video or image encoder, a video or image decoder, a media content provider system, a media content streaming system, a mobile device, a wearable device, a computer server, a media processing system, a cloud based computing system, laptop computer, netbook computer, tablet computer, desktop computer, computer workstation, or various other kinds of computing devices and media processing units.

Various modifications to the embodiments and the generic principles and features described herein will be readily apparent to those skilled in the art. Thus, the disclosure is not intended to be limited to the embodiments shown, but is to be accorded the widest scope consistent with the principles and features described herein.

### 2. ILLUMINATION DIRECTOR

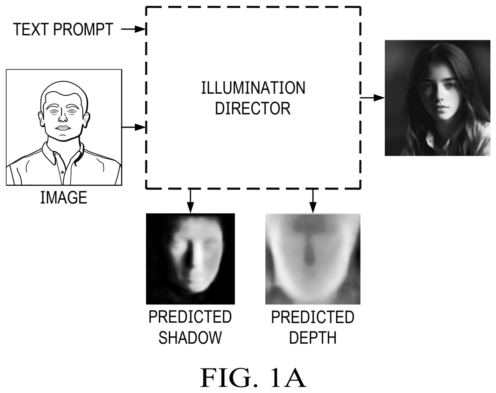

FIG. 1A illustrates an example computer-implemented illumination director used to implement some or all process flows described herein relating to light customization. The illumination director may be implemented with one or more computing processors in software, hardware or a combination of software and hardware using specific logics or computing system resources.

Lighting sources may be located in any position in a three-dimensional space. In some operational scenarios, a light source may be infinitely distant relative to the portrayed individual in a portrait image generated with a diffusion model; lighting from the light source may be uniform in intensity, arriving from a specific direction. In some other operational scenarios, a light source may be located at a finite distance relative to the portrayed individual in a portrait image generated with a diffusion model; lighting from the light source may arrive from different directions and/or with the same or different intensities. Lighting conditions may be represented using spherical harmonic coefficients (e.g., 0th order, 1st order, higher order, etc.).

An image generation pipeline implemented with the illumination director may operate in two phases: a training phase and a guidance phase. In each of the two phases, the image pipeline implemented with the illumination director generates or returns predicted shadow (a shadow image property represented with a shadow map), predicted depth (a depth image property represented with a shadow map), and/or other lighting or lighting related properties.

The lighting or lighting related properties generated or returned by the image pipeline including but not limited to shadow and depth are of an input image received by the illumination director or generated by a diffusion model operating in conjunction with the illumination director. Example lighting or lighting related properties may include, but are not necessarily limited to only, any, some or all of: shadow (specifying areas or objects not illuminated by the light source because of occlusion in the input image), depth (specifying depth of pixels depicting areas or objects in the input image), shading (specifying, given a light source, different luminance values of pixels depicting areas or objects in the input image), normal (specifying normal directions at surfaces of objects depicted in the input image), albedo (specifying inherent reflectance properties of surfaces of objects depicted in the input image), etc.

Given the input image, the image generation pipeline implemented by (or the diffusion model operating with) the illumination director may generate, extract or return lighting or lighting related properties such as shadow, depth, normal, albedo, shading, etc., of the input image. These lighting or lighting related properties are caused by lighting conditions of a corresponding light source located at a specific spatial location and/or spatial direction from the individual/head/face depicted in the input image.

The image generation pipeline may - logically not physically - change, update or convert the light source into a different updated light source with different intensity, different light distribution, different spatial location, different spatial direction, etc., by way of image generation with the diffusion model operating in conjunction with the illumination director. Consequently, one or more of the lighting or lighting related properties of the input image are changed.

For example, the shadow or shading property as extracted from the input image may be changed, updated or converted into a different updated shadow or shading property with new or updated lighting conditions of new or updated light source that does not exist in the input image and that is different from the corresponding light source associated with the extracted lighting or related properties of the input image.

The different updated shadow or shading property - and/or other updated lighting or lighting related properties - may be applied by the image generation pipeline in the image generation process or denoising process step of the diffusion model to generate a relit or lighting-transferred image corresponding to the different new/updated light source.

### 3. TRAINING AND GUIDANCE PHASES

As illustrated in FIG. 1A, the image generation pipeline or the diffusion model operating with the illumination director may receive an input in the form of an image or a text prompt or user input specifying one or more lighting conditions or light source properties.

In the training phase, the input may, but is not limited to, be received in the form of a (e.g., training, etc.) image with which the diffusion model learns to make relatively accurate prediction or estimation of lighting or related properties (e.g., light source location such as position and direction, light source intensity, an illumination field associated with a light source, etc.).

In the guidance phase, two inputs may be received. The first input may, but is not limited to, be received in the form of a text prompt to generate an image for light customization. The second input may, but is not limited to, be received in the form of (1) user input specifying lighting conditions or light source properties or (2) a reference image (e.g., as illustrated at the leftmost of FIG. 2A, etc.) from which lighting conditions or light source properties may be derived.

The diffusion model operating in conjunction with the illumination director may include or implement two processing steps. The first processing step in the diffusion model is a forward diffusion or noise adding processing step which adds noise to an input image or the latent feature of an input image. The second processing step in the diffusion model is a reverse diffusion or denoising processing step which receives an output or noisy image or noisy latent feature from the first processing step in the same diffusion model and proceeds to remove noise from or to denoise the noisy image into the image generated or outputted by the diffusion model, or to remove noise from or to denoise the noisy latent feature into the latent feature generated or outputted by the diffusion model.

The training phase may be used by the image pipeline or illumination director to train the diffusion model to learn lighting (or lighting related) properties of (e.g., training, input, etc.) images during the second (denoising) processing step. In this phase, the diffusion model learns to estimate and understand one or more selected properties of the images such as shadow maps, shading maps, or depth maps related to lighting during its denoising processing step. Errors or losses may be computed to measure or assess accuracy in prediction or estimation of these properties or the maps representing these properties of the images. The computed errors/losses may then be used to optimize operational parameters of the diffusion model - e.g., via backpropagation, etc. - to reduce future errors/losses in prediction or estimation of the same lighting or related properties of additional training images, test images, or reference images.

As a result of this training phase, the diffusion model as described herein not only maintains its ability to generate images from corresponding text prompts but also uses or operates with the trained, learned or optimized operational parameters to make relatively accurate predictions or estimations of the (selected) lighting or related properties of any given images including but not limited to (e.g., automatically, etc.) generated images from corresponding text prompts.

Specific types of lighting or lighting-related properties of images may be identified, selected or included for learning by the diffusion model from the training images in the training phase. The selection or training/learning/estimation of the specific types of lighting or related properties for or by the diffusion model may take into consideration (e.g., training, etc.) dataset sizes and/or learning rates/times and/or model sizes/latencies. Training operations, processes or frameworks for the diffusion model to learn or estimate lighting or related properties of some selected type may be generalized or extended so that the diffusion model can learn or estimate lighting or related properties of other or additional types.

The guidance phase may be used for model application after training by the illumination director operating with the (e.g., trained, pre-trained, etc.) diffusion model to generate image based on a text prompt under lighting conditions specified by a user with reference image or user input. The guidance phase may comprise two stages.

In the first stage of the guidance phase, the diffusion model operating with the illumination director is used to generate a pre-customized image (e.g., as illustrated in the middle of FIG. 2A, etc.) - it should be noted that the actual generation of the pre-customized image may be optional in some operational scenarios; in these operational scenarios, only noisy latent features or feature maps used to generate the pre-customized image may be generated - from a user prompt specified by the user as input and extract pre-customized lighting (or related) properties from the pre-customized image. The pre-customized lighting properties such as pre-customized depth and shadow maps extracted with the (trained/learned) diffusion model may be used to determine pre-customized lighting conditions such as pre-customized light source location (position and/or direction), pre-customized light source intensity, etc., for example by applying ray tracing based at least in part on the pre-customized depth and shadow maps.

In the first stage of the guidance phase, new or updated lighting conditions to be used to customize the pre-customized image can also be determined based on the reference image or user input.

In some operational scenarios, the user specifies the new or updated lighting conditions using a reference image as input to the illumination director. The (trained/learned) diffusion model operating with the illumination director can extract reference lighting (or related) properties from the reference image. The reference lighting properties such as reference depth and shadow maps extracted with the diffusion model may be used to determine reference lighting conditions such as reference light source location (position and/or direction), reference light source intensity, etc., for example by applying ray tracing based at least in part on the reference depth and shadow maps.

In some operational scenarios, the user explicitly specifies the new or updated lighting conditions with user input without a reference image. For example, the user input may be user interface (UI) controls and/or UI (e.g., textual, etc.) input. The user input can be directly applied to determine some or all of the reference lighting conditions or light source properties such as the reference light source location (position and/or direction), the reference light source intensity, etc. In these operational scenarios, some or all of the reference lighting conditions or light source properties may be determined without applying ray tracing using any reference depth and shadow maps extracted from a reference image.

In some operational scenarios, to estimate lighting conditions associated with an image relatively accurately, specifically implemented/developed tools, third-party tools, etc., may be used by the system described herein, for example, to add one or more additional learnable properties in the diffusion model for estimating the light conditions.

In the second stage of the guidance phase, controlling lighting properties are generated using the pre-customized lighting properties and the reference lighting conditions respectively extracted or generated from the pre-customized image and the reference image in the first stage of the guidance phase.

### 4. LIGHTING CUSTOMIZATION

In some operational scenarios, some or all of the pre-customized lighting properties of the pre-customized image are modified or updated based at least in part on the reference lighting conditions specified by the user with either the reference image or explicit user input. For example, using the pre-customized depth map (e.g., obtained during the denoising step of the diffusion model, etc.) and the reference lighting condition such as the reference light source location, pixels that are disoccluded or occluded from the reference light source can be readily determined to generate a new or updated shadow map (or shadow mask). Similarly, using pre-customized normal and albedo (e.g., reflectance, etc.) maps and the reference lighting conditions such as the reference light source location or intensity, luminance components of pixels may be readily determined to generate or determine a new or updated shade map.

One or more lighting property update methods may be implemented to generate the new or updated lighting or related properties such as new or updated shadow or shade maps based at least in part on new or updated lighting conditions and a (e.g., pre-customized, etc.) depth map generated by the diffusion model with pre-customized shadow or shade maps. In some operational scenarios, the same (e.g., relatively precise, etc.) depth map//data estimation is applied during the denoising process that generates the output image with the new or updated lighting or related properties under the new or updated lighting conditions.

The new or updated lighting properties such as the new or updated shadow map or shade map may then be used or included as (e.g., a part of, etc.) controlling lighting properties to modify - or to re-execute with the controlling lighting properties - the denoising processing step of the diffusion model for the purpose of generating the output image with the same user prompt but with the controlling (or new/updated) lighting properties. Some or all of the controlling lighting properties can be utilized to guide or optimize image generation during the denoising processing step of the diffusion model to generate a lighting-customized image (e.g., as illustrated in the rightmost of FIG. 2A, etc.) from the diffusion model. This allows the generated image to exhibit image details under the desired or reference lighting conditions.

The diffusion model represents a generative model that learn to reverse a noisy process and iteratively denoising noisy or noise injected data with denoising layers (e.g., neural network layers, etc.) to generate an output image.

The denoising layers in the diffusion model perform the task or operation of gradually removing noise at each time step of the denoising process conditioned on noisy input. The diffusion model may include, implement or operate with an optimizer or mechanism that selectively applies specific optimization strategies or updates - for example, as a part of backpropagation of errors/losses computed based at least in part on differences between pre-customized lighting or related properties and new/updated lighting or related properties - to the denoising layers of the diffusion model to improve model performance or to focus on (e.g., the new or updated, etc.) lighting properties or conditions (e.g., focusing on shadow matching or paying attention to errors/losses/differences computed with or between pre-customized and new/updated shadow maps, etc.).

Hyperparameters may be specified or configured by the user and/or the system to instruct the optimizer to control or implement a specific strength of guidance or optimization in image generation with new or updated shadow, shade and/or other lighting or related properties. A specific object or error function based on specific lighting or related properties of selected types may be defined, identified or used to compute errors/losses for optimization or backpropagation. The specific object or error function and/or specific lighting or related properties may be used in a conditional branch of the optimizer for selective optimization. Additionally, optionally or alternatively, the optimizer may apply specific update/learning rates or gradient updates for specific lighting or related properties.

### 5. ILLUMINATION ESTIMATOR

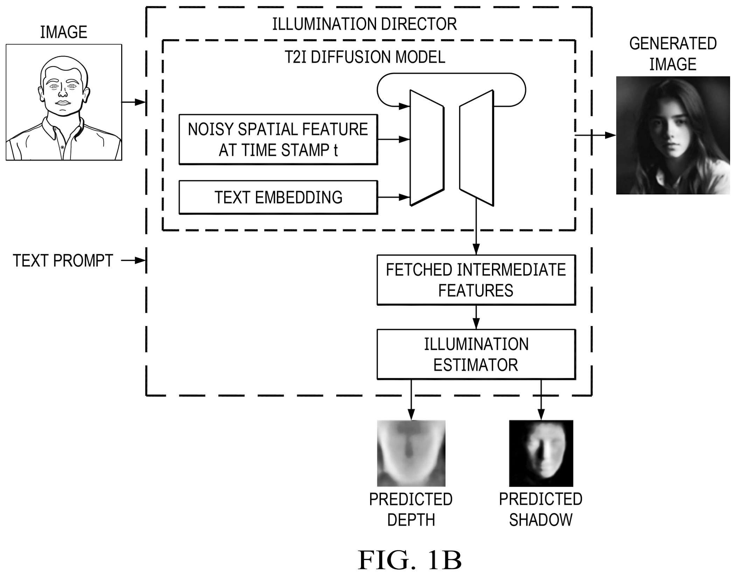

FIG. 1B illustrates example operations performed by an illumination director as described herein. Some or all of these operations are performed by the illumination director in both training and guidance phases. A process flow or flowchart including these operations may be implemented, executed or performed by the illumination director or an illumination estimator therein to estimate or generate lighting or related properties such as depth and shadow maps for portraits or images using intermediate or latent features from the (text-to-image or T2I) diffusion model.

Regardless of whether it operates in the training phase or guidance phase, and regardless of whether the user provides an image or a text prompt corresponding to an image, the image generation pipeline or the diffusion model (e.g., consistently, using the same denoising layers, etc.) returns or generates predicted lighting or related properties such as predicted depth data/map, predicted shadow data/map, etc., from the image. Hence, the T2I diffusion model can be used or implemented to support both types of input for the image from which the lighting or related properties are predicted/estimated using intermediate or latent features (e.g., in the denoising layers, etc.) by the diffusion model.

The image can be transformed or converted by the noisy (or noise-adding) processing step of the diffusion model into tensors - e.g., noisy spatial features or feature maps in tensor representation, etc. that together with text embedding (e.g., vectors derived from the user prompt, used as a clue for the U-Net of the diffusion model, etc.) can be fed as input into the denoising step of the diffusion model, which may be a U-Net neural network (not shown) within the T2I diffusion model.

As the noisy spatial features and the feature maps are fed into - or corresponding tensors flow through - and progressively processed by layers or steps in the U-Net, intermediate results or outputs such as noisy spatial features or feature maps from these layers may be fetched, collected or gathered.

The fetched features can be transformed, aggregated, flattened, resized and combined into a unified feature or feature map in an output feature data representation. This unified feature or feature map can then be fed as input into the illumination estimator -a small neural network implemented with one or more of convolutional neural networks (CNNs), multi-layer perceptron (MLP), or another neural network architecture to generate output. This output of the illumination estimator represent predicted lighting or related properties of the selected types such as predicted depth data/map, predicted shadow data/map, etc.

In some operational scenarios, the illumination estimator may be implemented as a depth and shadow estimator during the denoising step in the T2I diffusion model. Additionally, optionally or alternatively, the same training and guidance phase may be extended to enable the illumination estimator to be trained or to operate as an estimator for other lighting or related properties in addition to or in place of the depth and shadow lighting properties.

### 6. TRAINING OPERATIONS

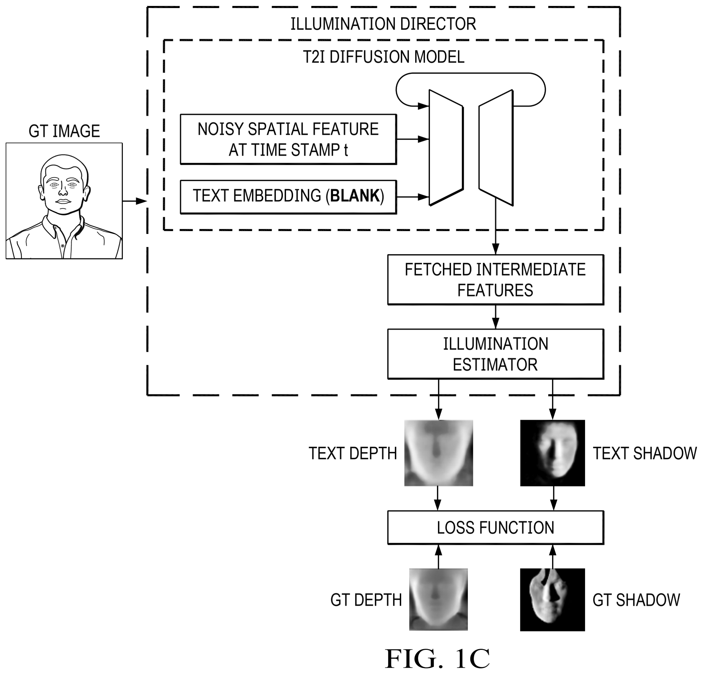

FIG. 1C illustrates example operations performed by an illumination director as described herein in the training phase. A process flow or flowchart including these operations may be implemented, executed or performed by the illumination director or an illumination estimator therein to learn to relatively accurately estimate or generate lighting or related properties such as depth and shadow maps for portraits or images using intermediate or latent features from the (text-to-image or T2I) diffusion model.

In the training phase, each of some or all training instances in a plurality of training instances in a training dataset may be used one-by-one to train the diffusion model in the image generation pipeline with the operations of FIG. 1C. Each training instance may include a (training) image paired with corresponding ground truth lighting or related properties such as ground truth depth and shadow data/maps created from the (training) image. The ground truth depth and shadow data/maps in the training instance may be synthetically generated using available computer graphics software or tools. Example description of computer graphics software or tools may be found in Hou, Andrew et al. "Face relighting with geometrically consistent shadows," Proceedings of the IEEE/CVF conference on computer vision and pattern recognition, pp. 4217-4226 (2022), the contents of which are incorporated herein by reference in entirety.

To customize or transfer lighting conditions in the image generation pipeline of the T2I diffusion model from a reference image to a generated image, the illumination estimator in the illumination director may be first trained with the (input) training dataset comprising a plurality of paired dataset portions respectively representing the plurality of training instances in the training data set.

As illustrated in FIG. 1C, for each training instance, the training process or operations begin with a (training portrait) image, which is fed as input into the T2I diffusion model. In the training phase, in some operational scenarios, there is no need to use an image generated from the diffusion model to train the diffusion model. Rather, training images in the training data set may be used as input to the diffusion model for training purposes. Also in the training phase, a text prompt for image generation is not needed as input to the diffusion model. Blank or randomly initialized text embedding may be used in place of any vector of text embedding generated from a text prompt.

At a specific or given timestep *t*, intermediate features can be extracted from selected denoising layers such as U-Net layers to form a comprehensive feature set as the input of the multi-head Convolutional Neural Network (CNN). For example, at each of the selected denoising layers, the diffusion model produces a noise feature or feature map in a noisy latent feature representation. Noisy latent features from these different denoising layers (and/or different timesteps) can be concatenated - possibly with other features (e.g., blank or random text embedding, etc. - to form an overall (e.g., comprehensive, complete, concatenated, etc.) feature set.

The concatenated feature set is then input into the illumination estimator, which may be implemented at least in part with a multi-head CNN. Each head of the CNN may be responsible for predicting one or more specific lighting or related properties of the training image. By way of illustration but not limitation, the multi-head CNN may be used to predict or estimate shadow and depth data/maps.

The predicted lighting or related properties such as depth and shadow data/maps can then be compared with the ground truth lighting or related properties in the same training instance such as the ground truth shadow and depth data/maps. An error or loss can be calculated based at least in part on differences between the predicted depth and shadow data/maps and the ground truth depth and shadow data/maps. This error/loss is used to optimize prediction model parameters of the illumination estimator or the multi-head CNN therein, thereby improving prediction/estimation accuracy during subsequent training or non-training iterations. In some operational scenarios, for depth, shadow and/or other selected lighting or related properties, an L1 (Mean Absolute Error) object, error or loss function may be used to compute the error or loss.

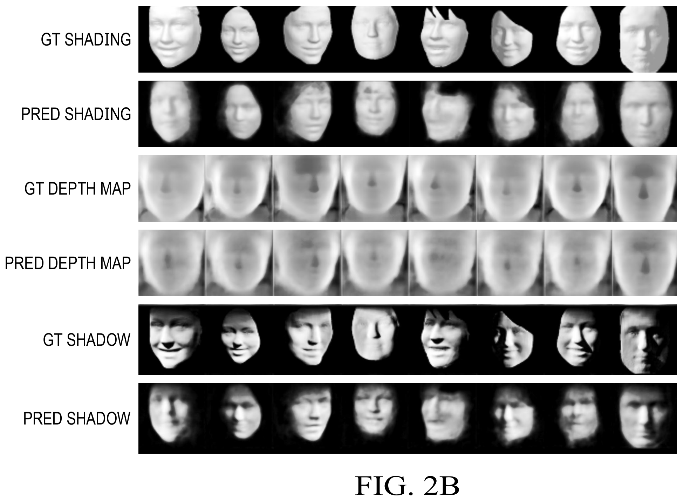

FIG. 2B illustrates example ground truth (GT) and predicted (pred) lighting or related properties in different rows. The GT lighting or related properties for may include, but are not necessarily limited to only, GT shading, GT depth map, GT shadow, etc. Correspondingly, the predicted lighting or related properties for may include, but are not necessarily limited to only, predicted shading, predicted depth map, predicted shadow, etc. As shown, the output of illumination estimator such as predicted shading, predicted depth map, predicted shadow, etc. demonstrate a relatively accurate prediction of the corresponding GT shading, GT depth map, GT shadow, etc., and a relatively strong ability to reproduce shading, shadow map, depth maps, etc., as compared with the corresponding GT shading, GT depth map, GT shadow, etc.

### 7. GUIDANCE OPERATIONS

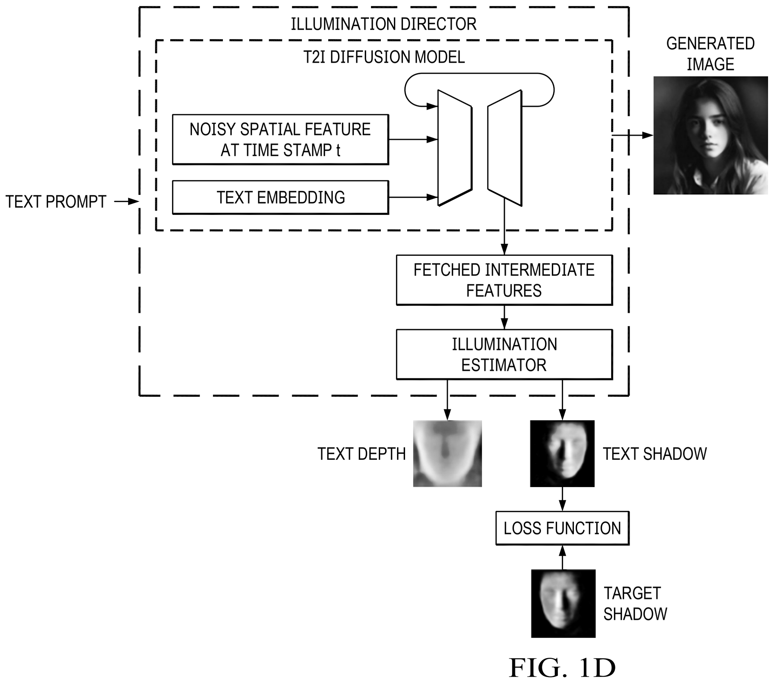

FIG. 1D illustrates example operations performed by an illumination director as described herein in the guidance phase. A process flow or flowchart including these operations may be implemented, executed or performed by the illumination director or an illumination estimator therein after the training phase to relatively accurately estimate or generate lighting or related properties such as depth and shadow maps for portraits or images using intermediate or latent features from the (text-to-image or T2I) diffusion model.

In the first stage of the guidance phase, in some operational scenarios, a reference image provided in user input. With the relatively well-trained illumination estimator operating with the diffusion model, the image generation pipeline or illumination direction can operate to determine or establish reference lighting or related properties including but not limited to shadow from the reference image. The reference lighting or related properties may be analyzed - e.g., with third party tools or toolkits, etc. - to extract or determine one or more reference light source properties such as reference light source position/direction and/or reference light source intensity. Additionally, optionally or alternatively, in some operational scenarios, the one or more reference light source properties such as reference light source potion/direction and/or reference light source intensity may be specified with the user input provided by the user.

A user prompt may be provided by the user in the first stage of the guidance phase. The user prompt can be transformed or converted by the noisy (or noise-adding) processing step of the diffusion model into tensors - e.g., pre-customized noisy spatial features or feature maps in tensor representation, etc. - and/or text embedding (e.g., vectors derived from the user prompt, etc.). The pre-customized noisy spatial features and/or the text prompt can be fed as input into the denoising processing step or the U-Net of the diffusion model operating with the optimizer. Other than the pre-customized noisy spatial features or feature maps and/or the text embedding, all other parts such as optimized/trained neural network operational parameters of the image generation pipeline or the diffusion model remain fixed or frozen after the training phase.

With the relatively well-trained illumination estimator operating with the diffusion model, the image generation pipeline or illumination direction can operate to predict or generate pre-customized lighting or related properties including but not limited to shadow of a pre-customized image. The pre-customized lighting or related properties of the pre-customized image may be updated, modified or converted into target (or controlling) lighting or related properties based at least in part on the reference light source properties determined from the reference image such as the reference shadow data/map or from the user-specified light source properties.

In the second stage of the guidance phase, with the pre-customized and target/controlling lighting or related properties, an error or loss between the predicted pre-customized lighting or related properties such as predicted pre-customized shadow and the target/controlling lighting or related properties such as target/controlling shadow may be computed. This error/loss can then be backpropagated by the optimizer into the noisy spatial features or feature maps, thereby generating new or updated (optimized) noisy spatial features or feature maps, which serve as (new or updated optimized) input to the U-Net of the diffusion model. The optimization with the error/loss in the noisy features or feature maps may occurs once during or for each denoising layer/step of the U-Net in the diffusion model. The total number of iterations or denoising layers/steps involved in this optimization may be controlled, as will be further explained in detail later.

### 8. LIGHTING CUSTOMIZATION

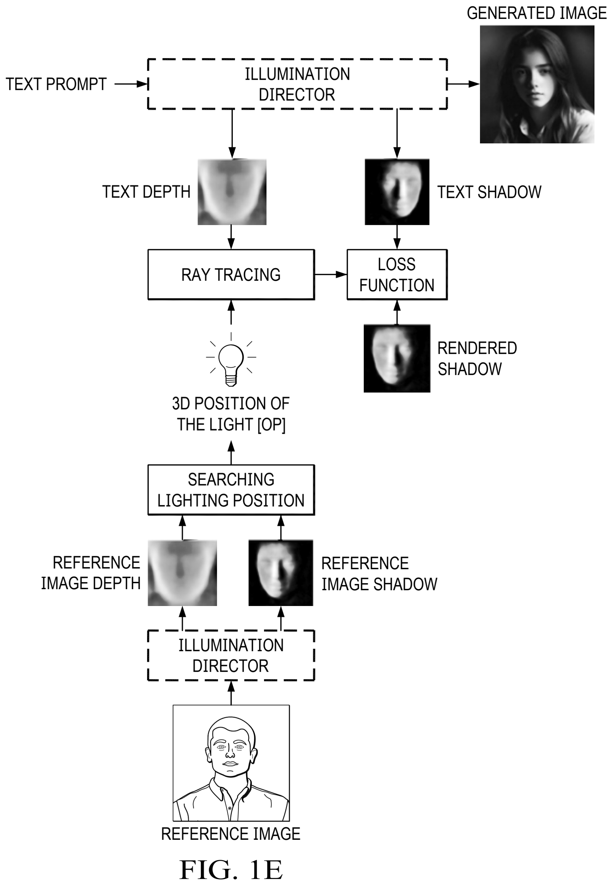

FIG. 1E illustrates example operations for generating target or controlling lighting or related properties and guiding image generation of a customized image with the target or controlling lighting related properties. A process flow or flowchart including these operations may be implemented, executed or performed by one or more computing devices operating with the illumination director or an illumination estimator therein after the training phase.

The guidance phase begins with a text prompt, which initiates or triggers the image generation process or operations in the T2I diffusion model, which may be a part of, or operate in conjunction with, the illumination director herein.

At a specific or given timestep *t*, intermediate features can be extracted from selected denoising layers such as U-Net layers to form a comprehensive feature set as the input of the multi-head Convolutional Neural Network (CNN). For example, at each of the selected denoising layers, the diffusion model produces a noise feature or feature map in a noisy latent feature representation. Noisy latent features from these different denoising layers (and/or different timesteps) can be concatenated - possibly with other features (e.g., text embedding, in a vector form, etc.) - to form an overall (e.g., comprehensive, complete, concatenated, etc.) feature set. The concatenated feature set can be used as input into the illumination estimator in the illumination director to predict or estimate pre-customized lighting or related properties such as depth and shadow.

In addition, as noted, two options may be used by the user to specify the reference light source properties. In the first option, the user can provide user input directly specifying the reference light source properties such as the (spatial or 3D) position or direction and/or intensity of the reference light source. In the second option, as illustrated in FIG. 1E, the user can provide user input specifying a reference image, which may be used by the system as described herein to determine the reference light source properties.

In operational scenarios in which the second option is used by the user, reference noisy spatial features or feature maps of the reference image may be generated with the diffusion model as a part of or operating in conjunction with the illumination director. Reference light or related properties of the reference image may be predicted/estimated with the illumination director or the illumination estimator therein that has been trained to use the reference noisy spatial features or feature maps as input too predict the corresponding reference light or related properties of the reference image such as reference image depth or reference image shadow.

Since the image generation pipeline or the illumination director as described herein functions as or includes a lighting properties estimator during the denoising process, noise can be added by the noisy or noise adding processing step of the diffusion model to generate a noisy (latent) spatial feature or feature map of the reference image. The noisy feature or feature map can be fed into the U-Net of the diffusion model to generate further noisy (but gradually denoised) features or feature maps from the denoising layers/timesteps of the U-Net. These noisy features of feature maps from the denoising layers/timesteps can be concatenated into an overall feature set to be received by the illumination estimator for obtaining or predicting/estimating reference lighting or related properties such as the reference depth and shadow maps corresponding to the reference image.

Ray tracing or third-party tools/toolkits that search for lighting or light source position based on shadow and depth may be used or applied to the reference light or related properties such as shadow and depth data/maps for the purpose of determining or searching for the reference light source properties in the reference image relatively accurately. The reference lighting or light source properties may include, but are not necessarily limited to only, a 3D position of the light source for optimization or customization. For determining the 3D light position from the reference image, a brute-force search of a solution space comprising some or all potential or candidate light source positions may be searched. Additionally, optionally or alternatively, a relatively small artificial neural network may be trained to learn this search process for the reference 3D light source position based on the reference lighting or related properties in advance (e.g., in a training phase for the small network, etc.). The latter approach takes advantage of lighting or related properties obtained/predicted/estimated during the data preparation or training phase, and ensures that no additional data is needed in training the small network for predicting reference light source properties such as the reference 3D light source position.

Using the reference lighting or light source properties instead of the pre-customized lighting or light source properties, ray tracing may be performed (again) on the pre-customized lighting or related properties such as the depth data/map - predicted/estimated from the pre-customized image corresponding to the text prompt - to render or generate the target (or controlling) lighting or related properties such as the target/controlling shadow map.

For relatively high accuracy, the depth map used in the ray tracing can be taken from a final fully denoised image (or the pre-customized image) or from an intermediate stage or an intermediate denoised image (before the pre-customized image is generated or without actually generating the final pre-customized image).

While the target/controlling shadow map retains the same geometric information or features as the pre-customized shadow map predicted from the text prompt or the corresponding pre-customized image, the target or controlling shadow has a target or controlling visual appearance corresponding relatively accurately to the reference lighting or light source properties. This target or controlling visual appearance differs from a pre-customized visual appearance corresponding to the pre-customized lighting or light source properties of the pre-customized image.

As noted, in the second stage of the guidance phase, with the pre-customized and target/controlling lighting or related properties, an error or loss between the predicted pre-customized lighting or related properties such as predicted pre-customized shadow and the target/controlling lighting or related properties such as target/controlling shadow may be computed. This error/loss can then be backpropagated by the optimizer into the noisy spatial features or feature maps, thereby generating new or updated (optimized) noisy spatial features or feature maps and ensuring the resulting generated image relatively accurately reflects the target/controlling lighting or related properties such as expected shadow information.

### 9. RELIGHTING

In some operational scenarios, the image generation pipeline or illumination director after training can be used in the guidance phase to support relighting in which a generated image appears illuminated from a (new or update) light source as specified by a user instead of an implicit/pre-customized light source with implicit or pre-customized light source properties.

The user provides a text prompt, such as "a portrait of a girl," for the generated image to be generated by the diffusion model operating with the illumination director. Initially, the diffusion model may generate a pre-customized image for the user prompt without guidance (or without new or updated light conditions corresponding to the new or updated light source). In the present example, a portrait of a girl without guidance - or without the light conditions corresponding to the specified light source - is generated as the pre-customized image.

The user can provide user input specifying - for example, using a function get_lighting_condition() in TABLE 1 - some or all of the new or updated conditions corresponding to the new or updated light source to be used to re-light or re-illuminate the subject to be portrayed in the generated image. Example light source properties of a light source as described herein may include, but are not necessarily limited to only, a 3D position, spatial direction, spherical harmonics or spatial/directional distribution of illumination, etc., related to the light source.

The illumination director or the trained illumination estimator therein can obtain, generate or predict pre-customized lighting or related properties of the pre-customized image for example, using latent features or feature maps from some or all denoising (e.g., 20 out of 100, all 100, etc.) denoising layers/timesteps of the diffusion model. These pre-customized lighting or related properties of the pre-customized image as predicted/estimated by the illumination estimator may include, but are not necessarily limited to only, depth and shadow (lighting or properties) represented by depths and shadow data/maps.

Given the pre-customized lighting or related properties such as the depth map, a new or updated shadow mask/map may be generated through ray-tracing under the new or updated lighting conditions corresponding to the new or updated light source. Hence, the new or updated shadow mask/map can be generated for the new or updated light source properties as specified by the user.

The diffusion model may be invoked or used to generate the generated image with the same text prompt, but this time with applied guidance based at least in part on the new or updated light source conditions corresponding to the new or updated source. To apply guidance with the new or updated lighting or related properties such as the new or updated shadow map, the error or loss between the predicted/estimated shadow map of the pre-customized image and the new or updated shadow map may be calculated or measured. The error or loss may be used by the optimizer to back propagated to optimize, or update or modify, operational parameters and/or the latent features. These optimized parameters or latent features can be used by the diffusion model as an optimized object or conditional branch feature to produce a re-lit image as the generated image. An example procedure to re-light a generated image with user specified light source properties is illustrated in TABLE 1 below.

**TABLE 1**

| |
|---|
| ```
# User provides a text prompt
           text_prompt = "a portrait of a girl"
           # Initial denoising to obtain depth map at step 20
           for step in range(100):
             latent_feature = denoise_step(step, text_prompt)
             if step == 20:
               depth_map = extract_depth_map(latent_feature)
``` |
| ```
           # Get lighting condition from the user input
           # Generate target shadow map using new lighting condition
           target_shadow_map = ray_trace_shadow(depth_map,
           get_lighting_condition())
           # Denoising with guidance, optimizing shadow match
           for step in range(100):
             latent_feature = denoise_step(step, text_prompt,
           guidance=target_shadow _map)
             loss = calculate _loss(extract_shadow_map(latent_feature),
           target_shadow_map)
             optimize(latent_feature, loss)
           # Final output: Relit portrait image
           output_image = generate_final_image(latent_feature)
 
``` |

### 10. SHADOW CONTRAST CONTROL

Shadow contrast strength may be modulated in image generation as described herein. The user or user input can provide or specify a shadow contrast strength parameter such as a value ranging from 0 to 1 representing or proportional to a shadow strength or intensity. A value of 0 for the shadow contrast strength parameter indicates no shadow, whereas a value of 1 for the shadow contrast strength parameter indicates the strongest shadow. This shadow contrast strength parameter can be used to influence the guidance phase by determining the total number of iterations or denoising layers/timesteps involved. For example, if the user specifies 0.5 for the shadow contrast strength parameter, then half of the denoising layers/timesteps may be involved in the guidance optimization with their respective optimized latent features updated or modified with the error or loss. An example procedure to modulate shadow strength - for example, in re-lighting a generated image with user specified light source properties - based on a user specified parameter is illustrated in TABLE 2 below.

**TABLE 2**

| |
|---|
| ```
             # User provides a text prompt and shadow intensity strength
             text_prompt = "a portrait of a girl"
             shadow_strength = 0.5 # Range from 0 (no shadow) to 1 (strongest shadow)
             # Initial denoising to obtain depth and shadow maps
             for step in range(100):
               latent_feature = denoise_step(step, text_prompt)
               if step == 20:
                 depth_map = extract_depth_map(latent_feature)
``` |
| ```
             # Generate target shadow map using ray tracing based on depth map
             target_shadow_map = ray_trace_shadow(depth_map,
             get_lighting_condition())
             # Denoising with guidance based on shadow strength
             guided_steps = int(100 * shadow_strength)
             for step in range(100):
               if step < guided_steps:
                 latent_feature = denoise_step(step, text_prompt,
             guidance=target_shadow_map)
                 loss = calculate_loss(extract_shadow_map(latent_feature),
             target_shadow_map)
                 optimize(latent_feature, loss)
               else:
                 latent_feature = denoise_step(step, text_prompt) # Without guidance
             # Final output: Image with controlled shadow contrast
             output_image = generate_final_image(latent_feature)
``` |

### 11. LIGHTING TRANSFER

In some operational scenarios, the image generation pipeline or illumination director after training can be used in the guidance phase to support lighting transfer in which a generated image appears illuminated from a (new or update) light source as specified with a reference image by a user instead of an implicit/pre-customized light source with implicit or pre-customized light source properties.

The user provides a text prompt, such as "a portrait of a girl," for the generated image to be generated by the diffusion model operating with the illumination director. Initially, the diffusion model may generate a pre-customized image for the user prompt without guidance (or without new or updated light conditions corresponding to the new or updated light source). In the present example, a portrait of a girl without guidance - or without the light conditions corresponding to the specified light source - is generated as the pre-customized image.

The user can provide or specify the reference image to derive - for example, using IlluminationEstimation() with noisy reference latent features generated by the noisy or noise adding processing steps of the diffusion model as input - some or all of the new or updated conditions corresponding to the new or updated light source to be used to re-light or re-illuminate the subject to be portrayed in the generated image. Example light source properties of a light source as described herein may include, but are not necessarily limited to only, a 3D position, spatial direction, spherical harmonics or spatial/directional distribution of illumination, etc., related to the light source.

The illumination director or the trained illumination estimator therein can obtain, generate or predict pre-customized lighting or related properties of the pre-customized image for example, using latent features or feature maps generated from the pre-customized image by some or all denoising (e.g., 20 out of 100, all 100, etc.) denoising layers/timesteps of the diffusion model. These pre-customized lighting or related properties of the pre-customized image as predicted/estimated by the illumination estimator may include, but are not necessarily limited to only, depth and shadow (lighting or properties) represented by depths and shadow data/maps.

Given the pre-customized lighting or related properties such as the depth map, a new or updated shadow mask/map may be generated through ray-tracing under the new or updated lighting conditions corresponding to the new or updated light source. Hence, the new or updated shadow mask/map can be generated for the new or updated light source properties as specified by the user.

The diffusion model may be invoked or used to generate the generated image with the same text prompt, but this time with applied guidance based at least in part on the new or updated light source conditions corresponding to the new or updated source. To apply guidance with the new or updated lighting or related properties such as the new or updated shadow map, the error or loss between the predicted/estimated shadow map of the pre-customized image and the new or updated shadow map may be calculated or measured. The error or loss may be used by the optimizer to back propagated to optimize, or update or modify, operational parameters and/or the latent features. These optimized parameters or latent features can be used by the diffusion model as an optimized object or conditional branch feature to produce a re-lit image as the generated image. An example procedure to perform lighting transfer with a generated image with user specified light source properties is illustrated in TABLE 3 below.

**TABLE 3**

| |
|---|
| ```
          # User provides a reference image and a text prompt
          reference_image = load _image("reference.jpg")
          text_prompt = "a portrait of a girl"
          # Extract lighting properties from the reference image
          latent_ref = transform_to_latent(reference_image)
          noisy_latent_ref = add_noise(latent_ref, scheduler)
          lighting_properties = IlluminationEstimate(lighting=noisy_latent_ref)
          # Initial denoising to obtain depth map of the generated image
          for step in range(100):
            latent feature = denoise_step(step, text _prompt)
``` |
| ```
            if step == 20:
              depth_map = extract_depth_map(latent_feature)
          # Generate shadow mask using ray tracing and reference lighting properties
          target_shadow _map = ray_trace_shadow(depth_map, lighting_properties)
          # Perform guided denoising using the generated shadow mask
          for step in range(100):
            latent_feature = denoise_step(step, text_prompt,
          guidance=target_shadow_map)
            loss = calculate_loss(extract_shadow_map(latent_feature),
          target_shadow _map)
            optimize(latent_feature, loss)
          # Final output: Relit portrait image with lighting transferred from reference
          output_image = generate_final_image(latent_feature)
``` |

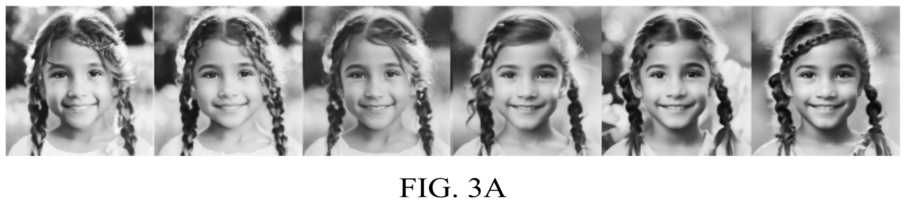

FIG. 3A illustrates example re-lit or lighting-transferred images generated by a diffusion model operating with an illumination director as described herein. As shown, lighting conditions of the generated images or portraits vary from one another, yet each generated image preserves a natural appearance of the subject depicted under different lighting conditions specified by the user. This series of images demonstrates consistent progressive transformations in user-specified lighting conditions that change from the left to the right. Specifically, the leftmost image shows a natural appearance of the subject illuminated by lighting from right to left, while the rightmost image shows a natural appearance of the subject illuminated by lighting from left to right. These generated images of natural appearances with different lighting conditions proves the capability, robustness, flexibility and precise control of the image generation pipeline as described herein to handle various lighting directions and intensities associated with a light source specified by the user with user input or reference images. Example applications of techniques as described herein may include, but are not necessarily limited to only, precise lighting control in photography, virtual character design, and so on.

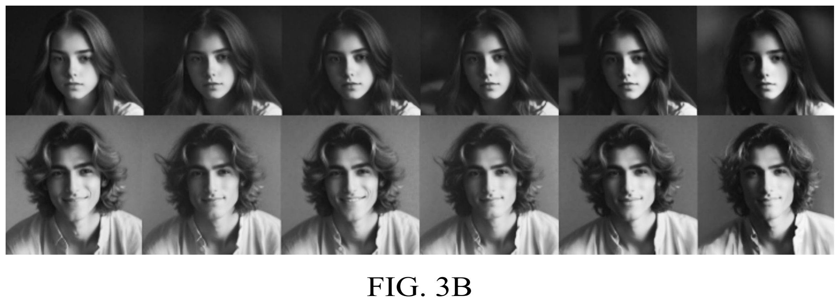

FIG. 3B illustrates example generated images with different controlled shadow contrast strengths. As shown, shadow contrast may be modulated from light to heavy shadows using image generation techniques as described herein. The far-left images demonstrate relatively small shadow contrast strength corresponding to lighting conditions with minimal shadow contrast, resulting in relatively soft and evenly lit portraits. The shadow contrast strength gradually increases from left to right. The far-right images demonstrate relatively large and high contrast shadow contrast strength corresponding to lighting conditions with heavy or maximal shadow contrast, resulting in less soft and unevenly lit portraits. These generated images of natural appearances with different controlled shadow strengths prove the capability, robustness, flexibility and precise control of the image generation pipeline as described herein to handle various shadow strengths as specified by the user. Example applications of techniques as described herein may include, but are not necessarily limited to only, precise shadow strength control corresponding to different artistic and photographic contexts or creative intents in photography, virtual character design, and so on.

In some operational scenarios, the image generation pipeline or illumination director may be trained and guided to support relatively high quality identity preservation in the generated image. In addition to lighting and shadow properties, the unique facial features of the subject may be preserved in the generated images even when light conditions may be changed in these images. The image generation pipeline or illumination director may integrate relatively advanced facial recognition and reconstruction techniques and/or incorporate models specifically trained to recognize and preserve unique facial features. Multi-view or multi-frame data may be used or generated to help maintain identity consistency by providing additional context and reducing reliance on single-frame estimations. Generative adversarial networks (GANs) that specialize in high-fidelity facial reconstruction may be implemented or incorporated to preserve identity while performing complex relighting tasks. Hence, example applications of these techniques may include, but are not necessarily limited to only, relatively accurate portrayal of individuals or characters in personalized media, virtual avatars, and so on.

Additionally, optionally or alternatively, techniques as described herein may operate with relatively advanced depth sensing technologies and/or sophisticated depth estimation algorithms that can handle diverse and complex scenes. The image generation pipeline or illumination director may apply or implement hybrid approaches that combine computer vision techniques with deep learning models for the purpose of training for, obtaining or generating relatively accurate depth data/maps. Multi-view or stereo imaging, time-of-flight sensors, LiDAR, etc., may be used to provide relatively accurate depth information (e.g., for training, for testing, for validation, etc.) that can be integrated into the image generation pipeline or illumination director. Training datasets can be enhanced with relatively diverse and complex scenes to help the prediction/estimation models learn to handle a wider range of depth variations and occlusions. Self-supervised or unsupervised learning techniques may be applied or implemented for depth estimation while reducing dependency on large annotated datasets, thereby making the models easier to learn and more versatile and robust to operate with a variety of depth variation scenarios.

### 12. EXAMPLE PROCESS FLOWS

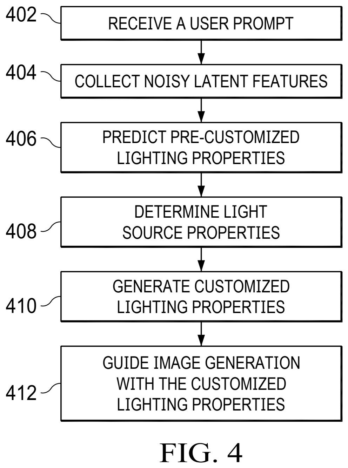

FIG. 4 illustrates an example process flow according to an embodiment. In some embodiments, one or more computing devices or components (e.g., an image generation system, a diffusion model, an AI/ML based automatic image generator, etc.) may perform this process flow. In block 402, a system described herein receives a user prompt for a diffusion model to generate an image.

In block 404, the system collects, based at least in part on the user prompt, noisy latent features generated by one or more denoising layers of the diffusion model. The noisy latent features are to generate a pre-customized version of the image.

In block 406, the system predicts, based at least in part on the noisy latent features, one or more pre-customized lighting properties of the pre-customized version of the image.

In block 408, the system determines one or more light source properties of a light source to be logically - as opposed to actually or physically - applied to generate a customized version of the image.

In block 410, the system applies the one or more light source properties of the light source to the one or more pre-customized lighting properties of the pre-customized version of the image to generate one or more customized lighting properties of the customized version of the image.

In block 412, the system uses a loss computed from the one or more customized lighting properties and the one or more pre-customized lighting properties to guide the diffusion model to generate the customized version of the image.

In an embodiment, the one or more customized lighting properties include a customized shadow map generated using ray tracing based at least in part on a pre-customized depth map and the one or more light source properties of the light source.

In an embodiment, the one or more light source properties of the light source are determined based at least in part on one of: user input specifying at least one of the one or more light source properties of the light source, a reference image used to derive the one or more light source properties of the light source, etc.

In an embodiment, at least one of the customized lighting properties is generated based at least in part on a physics model.

In an embodiment, the light source represents one of: a point light source, a light source of a finite size, a light source located at infinity, a light source located at a finite difference from a subject portrayed in the image, a light source of spatially uniformly distributed intensity, a light source of spatially non-uniformly distributed intensity, etc.

In an embodiment, the system further performs: using a shadow contrast strength parameter specified with user input to control shadow contrast strength in the customized version of the image.

In an embodiment, the one or more pre-customized lighting properties of the pre-customized version of the image are predicted with an illumination estimator that has been trained to predict lighting properties of selected types from a training set of images.

In an embodiment, the one or more light source properties of the light source are determined with a third party tool that generate light source properties of light sources based at least in part on lighting conditions represented in lighting properties of respective images.

In an embodiment, the loss is computed with a loss function based at least in part on the one or more pre-customized lighting properties and the one or more customized lighting properties.

In an embodiment, the loss is used to modify the noisy latent features into updated noisy latent features; the updated noisy latent features are used to generate the customized version of the image instead of the noisy latent features.

In an embodiment, the pre-customized lighting properties include one or more of: a depth map, a shadow map, a shading map, an albedo map, facial features, etc.

In an embodiment, the diffusion model represents a text-to-image diffusion model.

In an embodiment, the noisy latent features are concatenated into an overall feature set used to predict the one or more pre-customized lighting properties of the pre-customized version of the image.

In an embodiment, a computing device such as a display device, a mobile device, a set-top box, a multimedia device, etc., is configured to perform any of the foregoing methods. In an embodiment, an apparatus comprises a processor and is configured to perform any of the foregoing methods. In an embodiment, a non-transitory computer readable storage medium, storing software instructions, which when executed by one or more processors cause performance of any of the foregoing methods.

In an embodiment, a computing device comprising one or more processors and one or more storage media storing a set of instructions which, when executed by the one or more processors, cause performance of any of the foregoing methods.

Note that, although separate embodiments are discussed herein, any combination of embodiments and/or partial embodiments discussed herein may be combined to form further embodiments.

### 13. IMPLEMENTATION MECHANISMS - HARDWARE OVERVIEW

Embodiments of the present invention may be implemented with a computer system, systems configured in electronic circuitry and components, an integrated circuit (IC) device such as a microcontroller, a field programmable gate array (FPGA), or another configurable or programmable logic device (PLD), a discrete time or digital signal processor (DSP), an application specific IC (ASIC), and/or apparatus that includes one or more of such systems, devices or components. The computer and/or IC may perform, control, or execute instructions relating to the adaptive perceptual quantization of images with enhanced dynamic range, such as those described herein. The computer and/or IC may compute any of a variety of parameters or values that relate to the adaptive perceptual quantization processes described herein. The image and video embodiments may be implemented in hardware, software, firmware and various combinations thereof.

Certain implementations of the inventio comprise computer processors which execute software instructions which cause the processors to perform a method of the disclosure. For example, one or more processors in a display, an encoder, a set top box, a transcoder or the like may implement methods related to adaptive perceptual quantization of HDR images as described above by executing software instructions in a program memory accessible to the processors. Embodiments of the invention may also be provided in the form of a program product. The program product may comprise any non-transitory medium which carries a set of computer-readable signals comprising instructions which, when executed by a data processor, cause the data processor to execute a method of an embodiment of the invention. Program products according to embodiments of the invention may be in any of a wide variety of forms. The program product may comprise, for example, physical media such as magnetic data storage media including floppy diskettes, hard disk drives, optical data storage media including CD ROMs, DVDs, electronic data storage media including ROMs, flash RAM, or the like. The computer-readable signals on the program product may optionally be compressed or encrypted.

Where a component (e.g. a software module, processor, assembly, device, circuit, etc.) is referred to above, unless otherwise indicated, reference to that component (including a reference to a "means") should be interpreted as including as equivalents of that component any component which performs the function of the described component (e.g., that is functionally equivalent), including components which are not structurally equivalent to the disclosed structure which performs the function in the illustrated example embodiments of the invention.

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

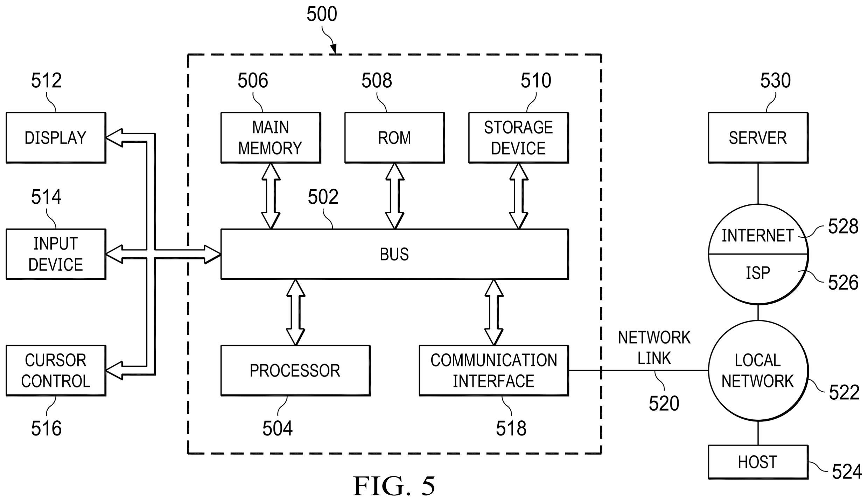

For example, FIG. 5 is a block diagram that illustrates a computer system 500 upon which an embodiment of the invention may be implemented. Computer system 500 includes a bus 502 or other communication mechanism for communicating information, and a hardware processor 504 coupled with bus 502 for processing information. Hardware processor 504 may be, for example, a general purpose microprocessor.

Computer system 500 also includes a main memory 506, such as a random access memory (RAM) or other dynamic storage device, coupled to bus 502 for storing information and instructions to be executed by processor 504. Main memory 506 also may be used for storing temporary variables or other intermediate information during execution of instructions to be executed by processor 504. Such instructions, when stored in non-transitory storage media accessible to processor 504, render computer system 500 into a special-purpose machine that is customized to perform the operations specified in the instructions.

Computer system 500 further includes a read only memory (ROM) 508 or other static storage device coupled to bus 502 for storing static information and instructions for processor 504. A storage device 510, such as a magnetic disk or optical disk, is provided and coupled to bus 502 for storing information and instructions.

Computer system 500 may be coupled via bus 502 to a display 512, such as a liquid crystal display, for displaying information to a computer user. An input device 514, including alphanumeric and other keys, is coupled to bus 502 for communicating information and command selections to processor 504. Another type of user input device is cursor control 516, such as a mouse, a trackball, or cursor direction keys for communicating direction information and command selections to processor 504 and for controlling cursor movement on display 512. This input device typically has two degrees of freedom in two axes, a first axis (e.g., x) and a second axis (e.g., y), that allows the device to specify positions in a plane.

Computer system 500 may implement the techniques described herein using customized hard-wired logic, one or more ASICs or FPGAs, firmware and/or program logic which in combination with the computer system causes or programs computer system 500 to be a special-purpose machine. According to one embodiment, the techniques as described herein are performed by computer system 500 in response to processor 504 executing one or more sequences of one or more instructions contained in main memory 506. Such instructions may be read into main memory 506 from another storage medium, such as storage device 510. Execution of the sequences of instructions contained in main memory 506 causes processor 504 to perform the process steps described herein. In other embodiments, hard-wired circuitry may be used in place of or in combination with software instructions.

The term "storage media" as used herein refers to any non-transitory media that store data and/or instructions that cause a machine to operation in a specific fashion. Such storage media may comprise non-volatile media and/or volatile media. Non-volatile media includes, for example, optical or magnetic disks, such as storage device 510. Volatile media includes dynamic memory, such as main memory 506. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 502. Transmission media can also take the form of acoustic or light waves, such as those generated during radio-wave and infra-red data communications.

Various forms of media may be involved in carrying one or more sequences of one or more instructions to processor 504 for execution. For example, the instructions may initially be carried on a magnetic disk or solid state drive of a remote computer. The remote computer can load the instructions into its dynamic memory and send the instructions over a telephone line using a modem. A modem local to computer system 500 can receive the data on the telephone line and use an infra-red transmitter to convert the data to an infra-red signal. An infra-red detector can receive the data carried in the infra-red signal and appropriate circuitry can place the data on bus 502. Bus 502 carries the data to main memory 506, from which processor 504 retrieves and executes the instructions. The instructions received by main memory 506 may optionally be stored on storage device 510 either before or after execution by processor 504.

Computer system 500 also includes a communication interface 518 coupled to bus 502. Communication interface 518 provides a two-way data communication coupling to a network link 520 that is connected to a local network 522. For example, communication interface 518 may be an integrated services digital network (ISDN) card, cable modem, satellite modem, or a modem to provide a data communication connection to a corresponding type of telephone line. As another example, communication interface 518 may be a local area network (LAN) card to provide a data communication connection to a compatible LAN. Wireless links may also be implemented. In any such implementation, communication interface 518 sends and receives electrical, electromagnetic or optical signals that carry digital data streams representing various types of information.

Network link 520 typically provides data communication through one or more networks to other data devices. For example, network link 520 may provide a connection through local network 522 to a host computer 524 or to data equipment operated by an Internet Service Provider (ISP) 526. ISP 526 in turn provides data communication services through the world wide packet data communication network now commonly referred to as the "Internet" 528. Local network 522 and Internet 528 both use electrical, electromagnetic or optical signals that carry digital data streams. The signals through the various networks and the signals on network link 520 and through communication interface 518, which carry the digital data to and from computer system 500, are example forms of transmission media.

Computer system 500 can send messages and receive data, including program code, through the network(s), network link 520 and communication interface 518. In the Internet example, a server 530 might transmit a requested code for an application program through Internet 528, ISP 526, local network 522 and communication interface 518.

The received code may be executed by processor 504 as it is received, and/or stored in storage device 510, or other non-volatile storage for later execution.

### 14. EQUIVALENTS, EXTENSIONS, ALTERNATIVES AND MISCELLANEOUS

In the foregoing specification, embodiments of the invention have been described with reference to numerous specific details that may vary from implementation to implementation. Thus, the sole and exclusive indicator of what is claimed embodiments of the invention, and is intended by the applicants to be claimed embodiments of the invention, is the set of claims that issue from this application, in the specific form in which such claims issue, including any subsequent correction. Any definitions expressly set forth herein for terms contained in such claims shall govern the meaning of such terms as used in the claims. Hence, no limitation, element, property, feature, advantage or attribute that is not expressly recited in a claim should limit the scope of such claim in any way. The specification and drawings are, accordingly, to be regarded in an illustrative rather than a restrictive sense.

### Enumerated Exemplary Embodiments

The invention may be embodied in any of the forms described herein, including, but not limited to the following Enumerated Example Embodiments (EEEs) which describe structure, features, and functionality of some portions of embodiments of the present invention.

EEE1. A method, comprising:
receiving a user prompt for a diffusion model to generate an image;
collecting, based at least in part on the user prompt, noisy latent features generated by one or more denoising layers of the diffusion model, wherein the noisy latent features are to generate a pre-customized version of the image;
predicting, based at least in part on the noisy latent features, one or more pre-customized lighting properties of the pre-customized version of the image;
determining one or more light source properties of a light source to be logically applied to generate a customized version of the image;
applying the one or more light source properties of the light source to the one or more pre-customized lighting properties of the pre-customized version of the image to generate one or more customized lighting properties of the customized version of the image;
using a loss computed from the one or more customized lighting properties and the one or more pre-customized lighting properties to guide the diffusion model to generate the customized version of the image.

EEE2. The method as recited in EEE1, wherein the one or more customized lighting properties include a customized shadow map generated using ray tracing based at least in part on a pre-customized depth map and the one or more light source properties of the light source.

EEE3. The method as recited in EEE1 or EEE2, wherein the one or more light source properties of the light source are determined based at least in part on one of: user input specifying at least one of the one or more light source properties of the light source, or a reference image used to derive the one or more light source properties of the light source.

EEE4. The method as recited in any of EEE1-EEE3, wherein at least one of the customized lighting properties is generated based at least in part on a physics model.

EEE5. The method as recited in any of Claims 1-4, wherein the light source represents one of: a point light source, a light source of a finite size, a light source located at infinity, a light source located at a finite difference from a subject portrayed in the image, a light source of spatially uniformly distributed intensity, or a light source of spatially non-uniformly distributed intensity.

EEE6. The method as recited in any of EEE1-EEE5, further comprising: using a shadow contrast strength parameter specified with user input to control shadow contrast strength in the customized version of the image.

EEE7. The method as recited in any of EEE1-EEE6, wherein the one or more pre-customized lighting properties of the pre-customized version of the image are predicted with an illumination estimator that has been trained to predict lighting properties of selected types from a training set of images.

EEE8. The method as recited in any of EEE1-EEE7, wherein the one or more light source properties of the light source are determined with a third party tool that generate light source properties of light sources based at least in part on lighting conditions represented in lighting properties of respective images.

EEE9. The method as recited in any of EEE1-EEE8, wherein the loss is computed with a loss function based at least in part on the one or more pre-customized lighting properties and the one or more customized lighting properties.

EEE10. The method as recited in any of EEE1-EEE9, wherein the loss is used to modify the noisy latent features into updated noisy latent features; wherein the updated noisy latent features are used to generate the customized version of the image instead of the noisy latent features.

EEE11. The method as recited in any of EEE1-EEE10, wherein the pre-customized lighting properties include one or more of: a depth map, a shadow map, a shading map, an albedo map, or facial features.

EEE12. The method as recited in any of EEE1-EEE11, wherein the loss is computed further based on one or more pre-customized person-specific facial features relating to a portrayed personal identity in the pre-customized version of the image; wherein the one or more pre-customized person-specific facial features are used in the loss to guide the diffusion model to generate the customized version of the image.

EEE13. The method as recited in EEE12, wherein the pre-customized person-specific facial features are acquired from one of: facial recognition and reconstruction techniques, or facial feature prediction models specifically trained to recognize and preserve unique facial features.

EEE14. The method as recited in any of EEE1-EEE13, wherein the diffusion model represents a text-to-image diffusion model.

EEE15. The method as recited in any of EEE1-EEE14, wherein the noisy latent features are concatenated into an overall feature set used to predict the one or more pre-customized lighting properties of the pre-customized version of the image.

EEE16. An apparatus performing any of the methods as recited in EEE1-EEE15.

EEE17. A non-transitory computer readable medium, storing software instructions, which when executed by one or more processors cause performance of the steps of any of the methods as recited in EEE1-EEE15.

## Claims

1. A method, comprising:
receiving a user prompt for a diffusion model to generate an image;
collecting, based at least in part on the user prompt, noisy latent features generated by one or more denoising layers of the diffusion model, wherein the noisy latent features are to generate a pre-customized version of the image;
predicting, based at least in part on the noisy latent features, one or more pre-customized lighting properties of the pre-customized version of the image;
determining one or more light source properties of a light source to be logically applied to generate a customized version of the image;
applying the one or more light source properties of the light source to the one or more pre-customized lighting properties of the pre-customized version of the image to generate one or more customized lighting properties of the customized version of the image; and
using a loss computed from the one or more customized lighting properties and the one or more pre-customized lighting properties to guide the diffusion model to generate the customized version of the image.

2. The method as recited in claim 1, wherein the one or more customized lighting properties include a customized shadow map generated using ray tracing based at least in part on a pre-customized depth map and the one or more light source properties of the light source.

3. The method as recited in claim 1 or 2, wherein the one or more light source properties of the light source are determined based at least in part on one of: user input specifying at least one of the one or more light source properties of the light source, or a reference image used to derive the one or more light source properties of the light source.

4. The method as recited in any one of claims 1 to 3, wherein at least one of the customized lighting properties is generated based at least in part on a physics model.

5. The method as recited in any one of claims 1 to 4, wherein the light source represents one of:
a point light source, a light source of a finite size, a light source located at infinity, a light source located at a finite difference from a subject portrayed in the image, a light source of spatially uniformly distributed intensity, or a light source of spatially non-uniformly distributed intensity.

6. The method as recited in any one of claims 1 to 5, further comprising: using a shadow contrast strength parameter specified with user input to control shadow contrast strength in the customized version of the image.

7. The method as recited in any one of claims 1 to 6, wherein the one or more pre-customized lighting properties of the pre-customized version of the image are predicted with an illumination estimator that has been trained to predict lighting properties of selected types from a training set of images.

8. The method as recited in any one of claims 1 to 7, wherein the one or more light source properties of the light source are determined with a third party tool that generate light source properties of light sources based at least in part on lighting conditions represented in lighting properties of respective images.

9. The method as recited in any one of claims 1 to 8, being configured in at least one of the following ways:
wherein the loss is computed with a loss function based at least in part on the one or more pre-customized lighting properties and the one or more customized lighting properties;
wherein the loss is used to modify the noisy latent features into updated noisy latent features; wherein the updated noisy latent features are used to generate the customized version of the image instead of the noisy latent features.

10. The method as recited in any one of claims 1 to 9, wherein the pre-customized lighting properties include one or more of: a depth map, a shadow map, a shading map, an albedo map, or facial features.

11. The method as recited in any one of claims 1 to 10, wherein the loss is computed further based on one or more pre-customized person-specific facial features relating to a portrayed personal identity in the pre-customized version of the image; wherein the one or more pre-customized person-specific facial features are used in the loss to guide the diffusion model to generate the customized version of the image, wherein optionally the pre-customized person-specific facial features are acquired from one of: facial recognition and reconstruction techniques, or facial feature prediction models specifically trained to recognize and preserve unique facial features.

12. The method as recited in any one of claims 1 to 11, wherein the diffusion model represents a text-to-image diffusion model.

13. The method as recited in any one of claims 1 to 12, wherein the noisy latent features are concatenated into an overall feature set used to predict the one or more pre-customized lighting properties of the pre-customized version of the image.

14. An apparatus configured to perform the method as recited in any one of claims 1 to 13.

15. A non-transitory computer readable medium, storing software instructions, which when executed by one or more processors cause performance of the steps of the method as recited in any one of claims 1 to 13.
